# EUROPEAN PATENT APPLICATION

(11) **EP 2 409 565 A1**
(43) Date of publication of application: **25.01.2012**
(21) Application number: 11382232.4
(22) Date of filing: 12.07.2011
(51) Int. Cl.: A01L 3/00, A01L 5/00

(54) **Fixing boot for equine animals**

(30) Priority: 22.07.2010 ES 201030772 U
(71) Applicant: Shoe Floting, S.L., 33529 Nava - Asturias (ES)
(72) Inventor: Gonzalez Garcia, Otilio, 33529 Nava - Asturias (ES); Pereira Suarez, Florentino, 33529 Nava - Asturias (ES)
(74) Representative: Carvajal y Urquijo, Isabel

(57) **Abstract**

Fixing boot (1) for equine animals with an open shape in its rear part comprising:
- a raised part (2) forming the vamp and the front end of the boot, its inner part contacting with the outer part of the sides of the animal hoof, and comprising at least one opening (11) and optionally at least one notch (13),
- a sole (3) comprising at least one suction-shaped relief (5) on the face contacting with the equine hoof,
- fixing means for fixing the boot to the equine.

## Description

### Technical Field of the Invention

The present invention is included in the field of boots for equines, and in particularly in the field of boots fixed to the extremity of the animal by adhesive, elastic and vacuum means.

### Background of the Invention

Boots are known elements for protecting the hooves of equines, specifically horses, substituting conventional metal horseshoes. Conventional metal horseshoes are fixed to the horse hoof using metal nails and other types of pointed elements (claw-shaped, for example) introduced in the hoof for its fixing. The process must be done very carefully to avoid harming the animal. Conventional metal horseshoes are being replaced with plastic boots and horseshoes with different shapes and fixing systems. Among these fixing systems, static belts and adhesive means stand out, allowing the fixing of different elements of the boot to different parts forming the animal hoof.

Some of the boots known in the state of the art are made of polymer material and comprise a raised part and a sole and is fixed by static belts or by adhesive means to the surface of the animal hoof. The raised part of the boot contacts the outer part of the sides of the animal hoof with its inner part and the sole contacts the terrain with its lower part and in its upper part contacts the sole of the animal hoof.

Boots for horses using static belt systems or adhesives as fixing means for fixing the boot to the hoof are known in the state of the art, for example, the boots described in document WO2007/030497 (Kirt Lander) or in WO2009142801 (Garrett N: Ford).

The boots described in WO2007/030497 as well as in WO2009142801 present a sole the lower part of which contacts with the terrain and the upper part of which contacts with the lower part of the animal hoof, and a raised part contacting with the side of the animal hoof. WO2007/030497 further comprises a part attached to the latter by means of a steel rope and the hoof by means of a static nylon belt.

The elements known in the state of the art present features relating to both the fixing means and to the shape of their parts giving rise to a series of limitations related with the securing of the boots to the horse hoof and the grip of the boot to the terrain that is being travelled on.

As far as the fixing means, the known systems are based, on the use of adhesive compounds extended over the inner part of the raised part of the boot for fixing it on the outer part of the animal hoof, the adhesive compound being retained between the described previously parts. In other words, in these known systems the adhesive is distributed in a layer generating a single contact surface between the parts, or by means of belts generally made from nylon which are fixed on the outer part of the raised part of the boot for fixing it to the extremity of the animal, exerting a static pressure on it causing the hoof to separate therefrom at the time of lifting and to come together therewith at the time of impact, causing grazes and insecurity in the animal.

The current boots fixed to the animal extremity or hoof by static means such as belts or adhesives additionally have an essentially flat sole in the upper part in contact with the lower part of the animal hoof. These flat soles do not adapt to the shape of the animal hoof, which could be the cause of adhesion problems in certain conditions (for example in steeply inclined terrain, situations with high levels of humidity, etc.). These problems are aggravated when the boot has an open shape in its rear part. In the present invention a boot with sole features intending to solve these drawbacks is described, improving the adjustment of the boot to the hoof and reducing its tendency to come out.

On the other hand, the sole of boots today is essentially perpendicular to the terrain at the point of contact between both elements. This essentially perpendicular shape generates problems due to the excess levering with respect to the centre. In boots with essentially perpendicular perimetric shapes, the contact of the boot with the terrain in joint movement is produced along a line, interfering in the natural movement of the joint and considerably limiting the life of the boot.

The boots known in the state of the art additionally have an excessive grip on asphalt or bituminous type pavements, which is a source of health problems in horse joints.

On the other hand, the boots known in the state of the art do not have significant differences in shape for their use in the front and/or rear hooves, despite said hooves having different shapes. Most of the known boots are designed for adapting to the front hooves, having securing deficiencies for the rear hooves, with considerably narrower shapes.

### Description of the Invention

The present invention solves the problems in the state of the with respect to the fixing of the boot to the hoof and the adhesion of the boot to the terrain by means of a boot with an open shape in its.rear part comprising:
a raised part forming the vamp and the front end of the boot and comprising at least one opening and optionally at least one notch,
- a sole comprising at least one suction-shaped relief on the face contacting with the sole of the equine hoof and optionally a bevel edge on the face contacting with the ground,
- fixing means for fixing the boot to the equine.

The fixing means can be an adjustable elastic part fixed to the rear part of the boot and in the upper area of the sole, adapting to the shape of the extremity of the animal.

The fixing means can also be adhesives, such that the opening or openings in the raised part of the boot allow that the presence of the adhesive material is not limited to the area comprised between the raised part and the animal hoof, but the flow of said adhesive material, which may be located in an adhesive material reservoir means in the inner part contacting with the hoof, boot, or placed before introducing the hoof into the boot, generates a rivet effect via the opening or openings, favouring the adhesion of the boot to the hoof.

In an embodiment of the invention, the shape of the at least one opening present in the raised part of the boot is of the frustoconical type, with the smaller diameter oriented towards the inner part of the boot in contact with the horse hoof, and the larger diameter oriented towards the outer part of the boot

The raised part as well as the sole additionally comprise at least one suction-shaped relief in the areas contacting with the extremity, which complements the natural shape of the horse hoof in its sole area as well as in the wall of the hoof and which, due to its design, causes the suctioning of the air trapped between the two parts at the time of bearing, creating a vacuum effect causing a very considerable connection between the hoof and the boot; on the other hand the part made from an elastic material maintains a dynamic and constant stress preventing the tendency of the parts to separate at times of lifting and impact. These features substantially improve adhesion.

The existence of at least one suction-shaped relief in the areas contacting with the hoof allows that in the part made of an elastic material the pressure may be substantially reduced on the more sensitive areas, preventing pathologies previously pointed out in the state of the art. The shape of the relief of the sole is such that it complements the natural shape of the sole of the horse hoof, favouring the adhesion of the boot to the hoof in complicated conditions such as climbs on steeply inclined terrain or situations with high levels of humidity in which conventional boots with a smooth sole known in the state of the art do not generate enough traction, giving rise to situations of loss of adhesion of the boot to the hoof. This insole activates and stimulates the tissues forming the sole of the horse hoof.

The contact of the sole of the boot with the terrain in joint articulated is produced through a surface as a result of the presence of the bevel edge with a length comprised between 3 and 7 millimetres and a height comprised between 4 and 8 millimetres. The presence of said bevel edge facilitates the movement of the horse hoof in all directions and reduces fatigue produced at the tendon level as well as the joint level when contact between the sole of the boot and the terrain occurs with an essentially perpendicular angle, as is the case of the boots known in the state of the art.

The sole can also have at least one hole traversing it from its upper part in contact with the lower part of the horse hoof, to its lower part contacting with the terrain. Said hole favours the elimination of possible dirt particles (mud, sand, etc.) which may enter the boot. Said hole would likewise allow the introduction of silicones or other deformable products giving additional support to the horse hoof if necessary.

The sole can additionally have at least one hole made in its lower part contacting with the terrain with a metal plug (8) inserted therein, in its lower part contacting with the terrain, improving the sliding conditions on asphalted pavements as well as increasing the traction on naturally soft terrain and reducing the rate of wear of the boot. The sole also has a recess in its rear part making the heel movements independent, facilitating the performance thereof on uneven terrain, thereby creating a great difference in comparison with the boots known in the state of the art.

The boot can have different overall shapes according to if it is used on the front or rear hooves. The rear hooves of the horse are narrower in their rear part in comparison with the front hooves. The use of the boots known in the state of the art on the rear hooves is a source of play giving rise to breakages of the product during use. The use of boots that are narrower in their rear part allows a better adjustment to the shape of the rear horse hooves, likewise improving the adhesion of the boot to the hoof and the durability of the product.

### Description of the Drawings

A set of drawings is described below which help to better understand the invention, and they expressly relate to an embodiment of said invention presented as an illustrative and non-limiting example of the invention.
Figure 1 depicts a general perspective view of a boot with a plurality of frustoconical openings for fixing with adhesive.
Figure 2 depicts a side view of the boot in Figure 1.
Figure 3 depicts an upper view of a boot in Figure 1.
Figure 4 depicts a lower view of a boot in Figure 1.
Figure 5 depicts a general perspective view of a boot with linear openings for fixing by elastic means.
Figure 6 depicts a side view of the boot in Figure 5.
Figure 7 depicts an upper view of the boot in Figure 5.
Figure 8 depicts a lower view of the boot in Figure 5.
Figure 9 depicts a rear view of the boot in Figure 5.

### Preferred Embodiments of the Invention

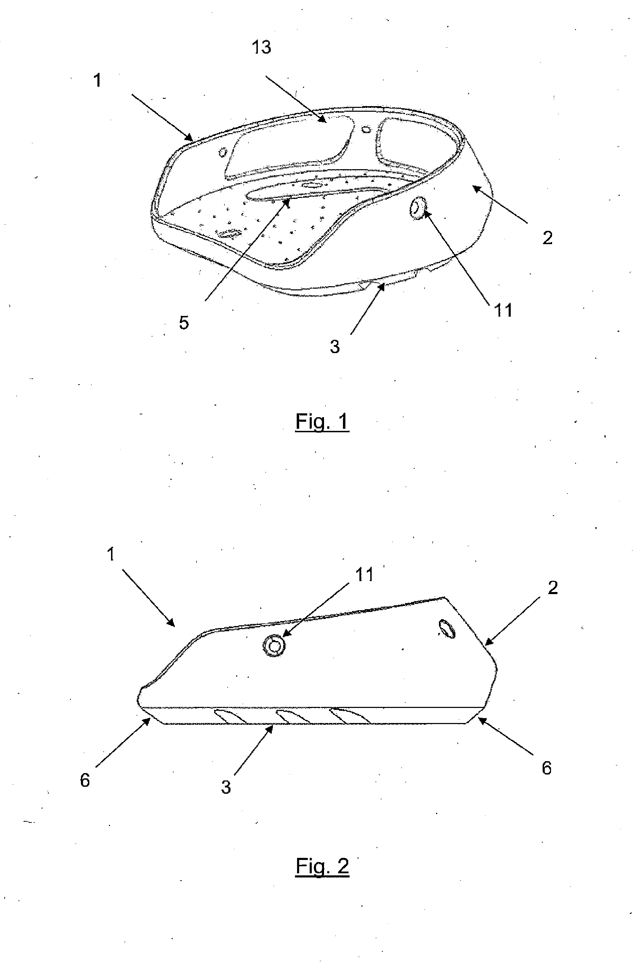

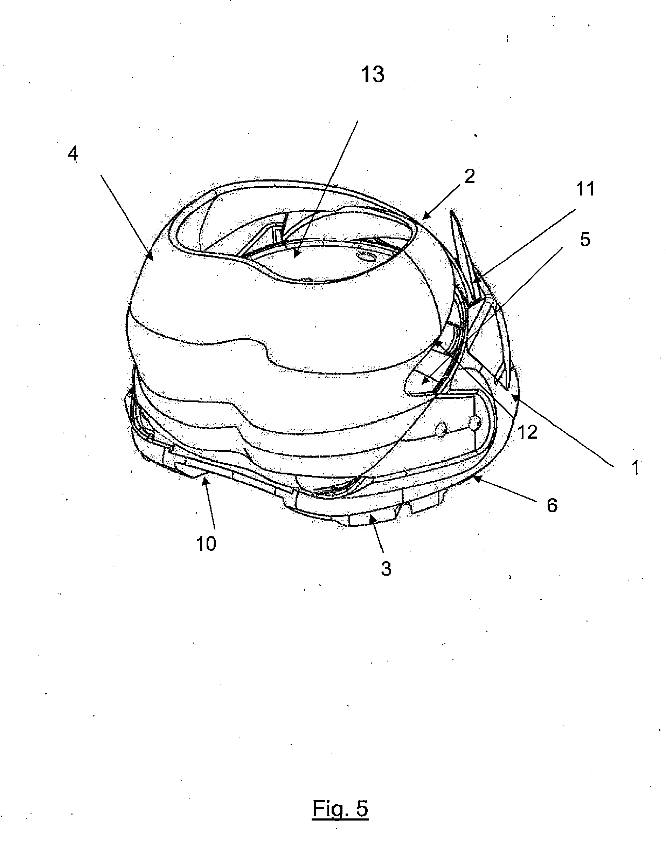

As shown in Figures 1 and 5, the boot for horses made from a polymeric material comprises:
- a raised part (2) forming the vamp and the front end of the boot and comprising at least one opening (11),
- a sole (3) comprising at least one suction-shaped relief (5) on the face contacting with the sole of the equine hoof and optionally a bevel edge (6) on the face contacting with the ground, and
- fixing means for fixing the boot to the equine.

The foregoing is such that the raised part (2) of the boot (1) contacts in its inner part with the outer part of the sides of the animal hoof and the sole (3) contacts in its lower part with the terrain and in its upper part with the sole of the animal hoof. Optionally, the raised part (2) can also comprise at least one notch (13) acting like a suction on the face contacting with the wall of the equine hoof.

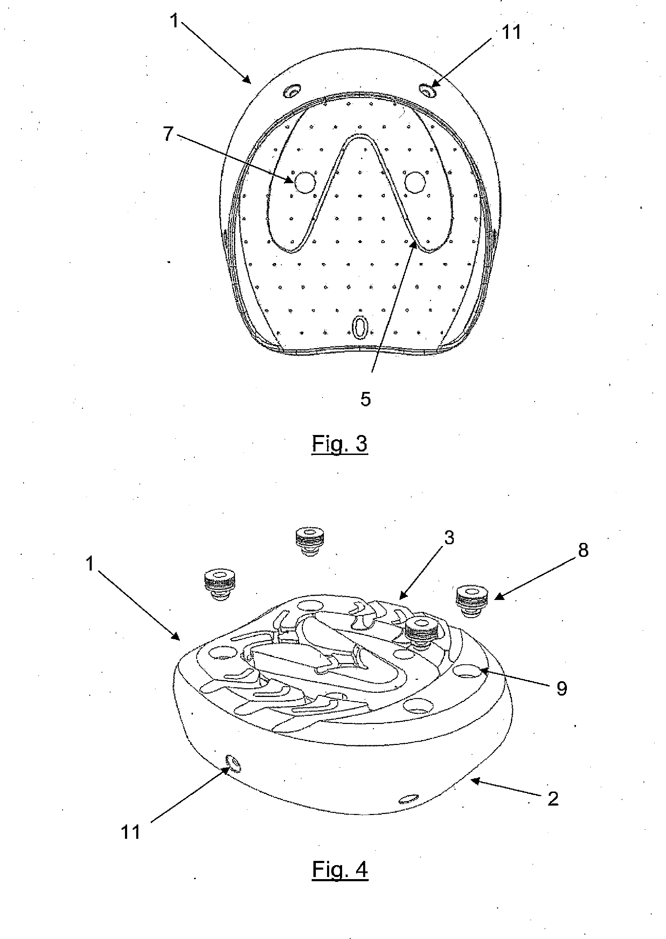

Figures 1-4 show an example of a boot in which the fixing means are an adhesive arranged on the inside of the boot.

The raised part (2) of the boot (1) comprises an opening (11) allowing the exit of the adhesive component therethrough, favouring the fixing of the boot (1) to the animal hoof. The opening (11) has a frustoconical shape, as shown in the boot (1) depicted in Figures 1-3.

The adhesive material flows from the inner part of the raised part (2) of the boot (1) in contact with the sides of the animal hoof towards the outer part of the boot (1) through at least one opening (11), generating a type of rivet creating extra securing between the boot (1) and the hoof, considerably improving the adhesion of the boot (1) in comparison with the devices known in the state of the art.

Figures 1 and 5 show a notch (13) on the inside of the boot improving the fixing by providing a suction effect.

The raised part (2) of the boot (1) comprises at least one suction-shaped cavity (13) creating a vacuum when adjusted.

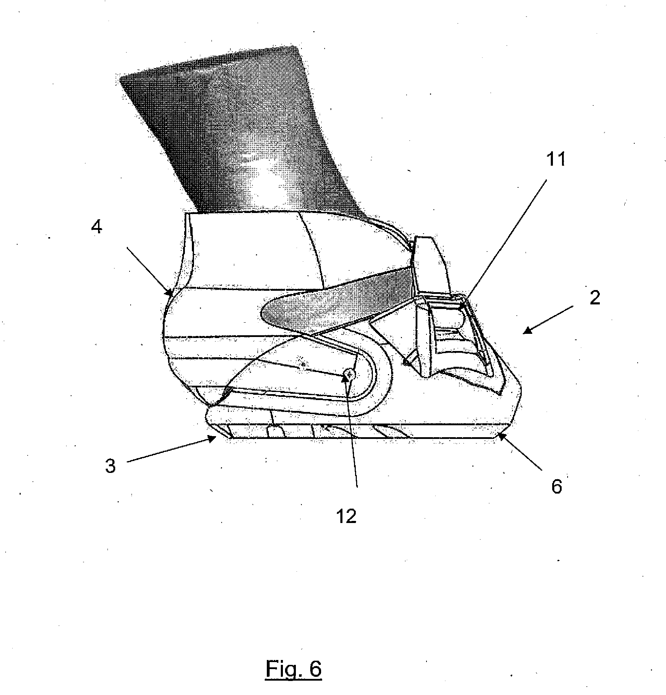

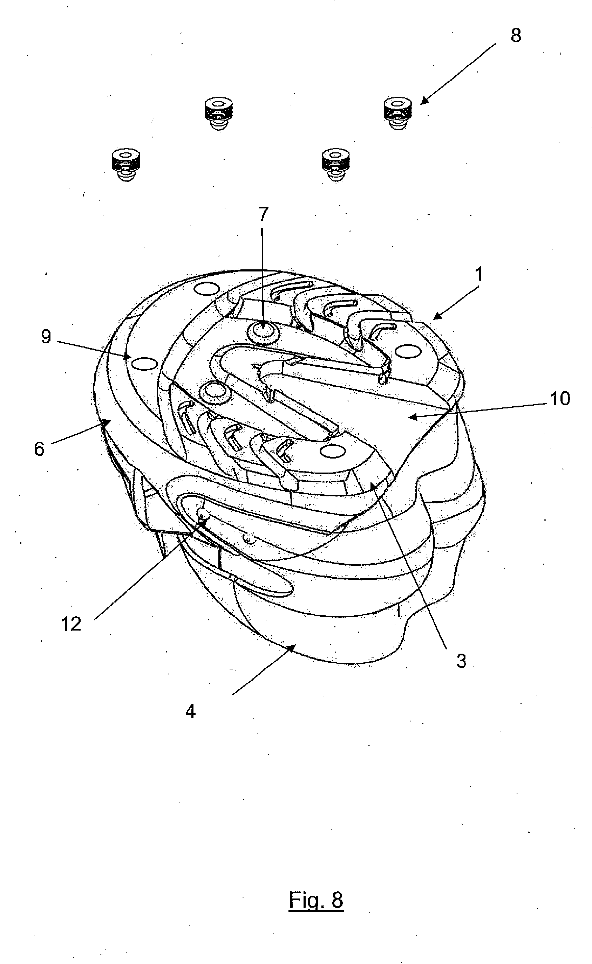

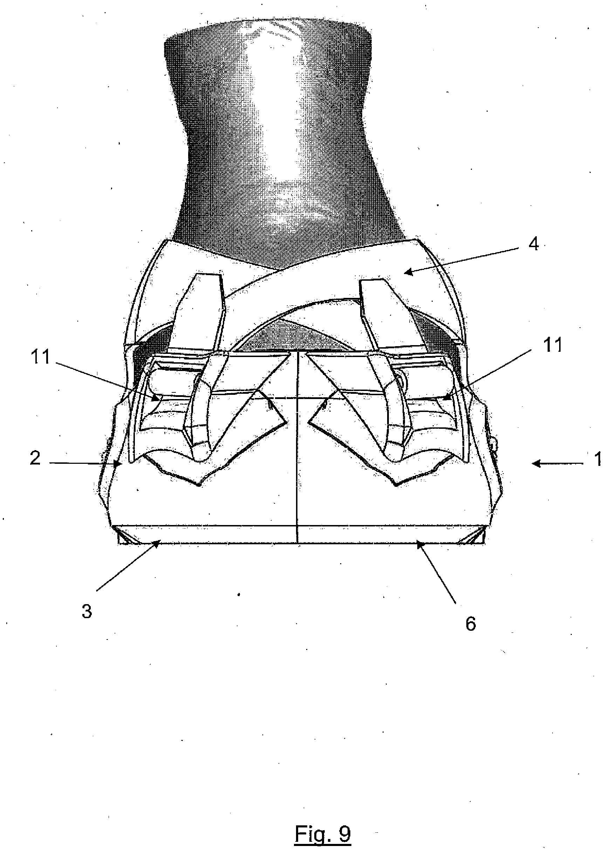

Figures 5-9 show an example of a boot in which the fixing means are an elastic material (4) fixed to the upper face and at the rear end of the sole (3) of the boot (1) and configured for being fixed to the openings (11) of the raised part (2) of the boot (1) and to two fixing elements (12) arranged laterally in the raised part (2) once the animal hoof is introduced into the boot.

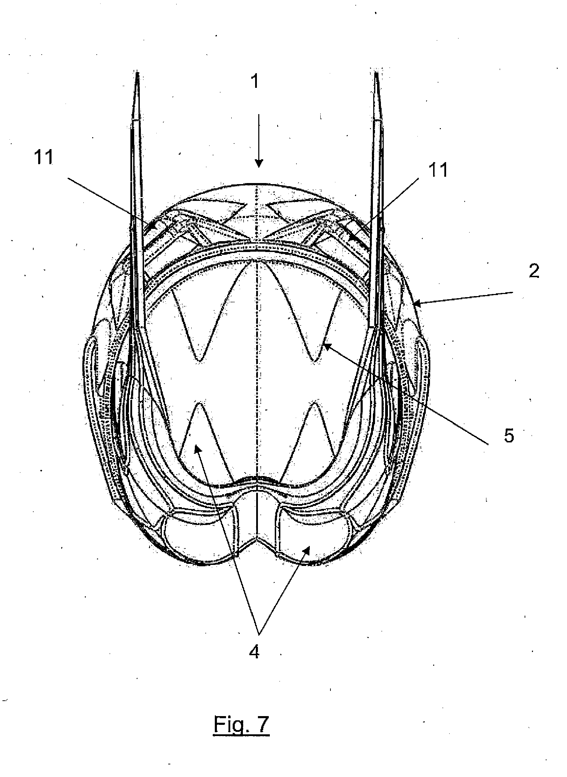

As can be seen in Figure 7, the elastic material comprises four ends, two short ones for fixing to the fixing elements (12) and two long ones for crossover fixing, around the animal leg, to the openings (11) of the raised part (2).

The relief (5) located in the upper part of the sole contacting with the sole of the animal hoof which substantially complements the natural lower shape of the sole of the hoof gives rise to a securing in addition to the one provided by the fixing means. This additional fixing allows improving the adhesion of the boot (1) in complicated movement conditions, such as climbs on steeply inclined terrain or situations with high humidity. This relief (5) on the upper surface of the sole additionally stimulates the plantar area of the horse hoof, activating the tissues forming the sole.

As shown in Figures 1-9, the sole (3) of the boot (1) in turn has:
- a bevel edge (6) in the lower part contacting with the terrain along its entire perimeter with dimensions comprised between 3 and 7 millimetres in length and between 4 and 8 millimetres in height, possibly being 5 millimetres in length and 6 millimetres in height. This perimetric bevel edge (6) together with a recess (10) in its rear part favours a better contact of the boot (1) with the terrain in all possible joint movements of the horse hoof, reducing the fatigue of the joints and improving the contact of the boot (1) with the terrain in comparison with the known systems in the state of the art in which the contact of the sole with the terrain is produced through an angle substantially close to 90° making the natural horse joint movements and the adhesion of the boot to the terrain on which travelling difficult.
- a hole (7) traversing the sole from its lower part contacting with the terrain to its upper part contacting with the lower part of the animal hoof. These holes, on one hand, favour eliminating possible dirt entering the boot (for example, sand particles, mud, etc.) and, on the other hand, allow the introduction of additional elastic materials (for example, silicone insoles) filling the possible existing cavities once the boot (1) has been fitted giving additional support if necessary.
- at least one metal plug (8), preferably of steel, inserted in a hole (9) made in its lower part contacting with the terrain. This steel plug (8) favours the sliding of the boot on asphalted or bituminous pavements (preventing the excessive grip produced with the boots known in the state of the art) and improves the traction of the boot (1) on soft terrain, likewise increasing the wear strength of the boot (1).
- a recess (10) in its rear part making the heel movements independent, facilitating the performance thereof on uneven terrain.

The boot (1) object of the present invention can additionally have different shapes and dimensions according to whether it is used on front animal hooves or rear animal hooves given that the natural anatomy of both hooves is considerably different. Thus, the boots used on the rear hooves may have a narrowing in their rear part in comparison with the boots used on the front hooves, improving the adjustment to the natural anatomy of the hoof and preventing limitations of the boots known in the state of the art (with identical shapes for the front and rear hooves) related to play in the adjustment which are causes of breakages during their use.

## Claims

1. A fixing boot (1) for equine animals with an open.shape in its rear part comprising a raised part (2) forming the vamp and the front end of the boot contacting in its inner part with the outer part of the sides of the animal hoof and a sole (3), **characterised in that** it comprises:
- at least one opening (11) in the raised part (2),
- at least one suction-shaped relief (5) on the face of the sole (3) contacting with the sole of the equine hoof,
- fixing means for fixing the boot to the equine.

2. The boot (1) according to claim 1, **characterised in that** it comprises at least one suction-shaped notch (13) in the raised area (2) on the face contacting with the wall of the equine hoof.

3. The boot (1) according to claims 1 and 2, **characterised in that** the fixing means are an adhesive arranged inside of the boot.

4. The boot (1) according to claim 3, **characterised in that** at least one opening (11) presents a frustoconical shape in which the smaller diameter is located in the inner part contacting with the sides of the animal hoof and the larger diameter in the outer part of the boot.

5. The boot (1) according to claim 3-4, **characterised in that** it comprises an adhesive material containing means in the inner part of the boot (1) contacting with the hoof.

6. The boot (1) according to claims 1 and 2, **characterised in that** the fixing means are an elastic material (4) fixed to the upper face and at the rear end of the sole (3) of the boot (1) and configured for being fixed to the openings (11) of the raised part (2) of the boot (1) once the animal hoof is introduced into the boot.

7. The boot (1) according to claim 6, **characterised in that** the raised part comprises two fixing elements (12) of the elastic material, arranged laterally in the raised part (4).

8. The boot (1) according to the preceding claims, **characterised in that** the sole (3) comprises a bevel edge (6) in the lower part contacting with the terrain and along its entire perimeter.

9. The boot (1) according to the preceding claims, **characterised in that** the sole (3) comprises a hole (7) traversing the sole (3) from its lower part contacting with the terrain to its upper part contacting with the lower part of the animal hoof.

10. The boot (1) according to the preceding claims, **characterised in that** the sole (3) comprises at least one hole (9) made in its lower part contacting with the terrain with a metal (8) plug inserted therein.

11. The boot (1) according to the preceding claims, **characterised in that** the sole (3) comprises a recess (10) in its rear part making the heel movements independent.
